# FASCICULE DE BREVET EUROPEEN

(11) **EP 2 799 392 B1**
(45) Date de publication et mention de la délivrance du brevet: **18.04.2018**
(21) Numéro de dépôt: 14165734.6
(22) Date de dépôt: 24.04.2014
(51) Int. Cl.: B67D 1/00, B67D 1/08

(54) **RÉSERVOIR À FILTRE INTÉGRÉ ET APPAREIL DE DISTRIBUTION DE BOISSON COMPRENANT UN TEL RÉSERVOIR**
BEHÄLTER MIT INTEGRIERTEM FILTER, UND GETRÄNKEAUSGABEGERÄT, DAS EINEN SOLCHEN BEHÄLTER UMFASST
TANK WITH BUILT-IN FILTER AND BEVERAGE DISPENSING APPARATUS INCLUDING SUCH A TANK

(30) Priorité: 29.04.2013 FR 1353925; 04.06.2013 FR 1355081
(43) Date de publication de la demande: 05.11.2014
(73) Titulaire: Trefle Groupe, 91031 Evry (FR)
(72) Inventeur: Liccioni, Thomas, 91120 Montrouge (FR); Liccioni, Robert, 77150 Lesigny (FR)
(74) Mandataire: Santarelli

(56) Documents cités:
- EP-A1- 0 905 084
- WO-A1-02/26615
- WO-A1-2012/136915
- WO-A2-2009/001061
- DE-U1- 20 312 951
- US-A1- 2004 134 932
- US-A1- 2010 000 931

## Description

La présente invention a trait à un réservoir pour un appareil de distribution de boisson telle qu'une fontaine à eau, ainsi qu'à un appareil de distribution de boisson comprenant un tel réservoir.

Il existe par exemple des appareils de distribution d'eau qui sont aptes à être raccordés à un réseau d'eau courante. Dans une telle configuration, il est alors nécessaire de purifier l'eau pour des raisons sanitaires, généralement au moyen de filtres pour que celle-ci soit dépourvue de chlore, notamment pour être potable. On connait par exemple le document WO 2012/136915 qui décrit un appareil raccordé à un réseau d'eau courante. L'appareil décrit comprend un circuit fixe comprenant un premier conduit, dont une partie en serpentin est immergée dans un réservoir d'eau de refroidissement pour être refroidie, des moyens de purification et un réseau de distribution en aval des moyens de purification. Par conséquent, pour assurer un nettoyage du réseau de distribution, l'appareil comprend en outre une dérivation qui contourne les moyens de purification pour pouvoir rincer le réseau de distribution. Les moyens de purification comprennent des filtres à charbon actif qui nécessitent d'être remplacés régulièrement. L'ensemble du circuit étant par ailleurs fixe, il est difficile d'accéder aux différents éléments pour les nettoyer indépendamment les uns des autres si nécessaire, et le remplacement des moyens de purification requiert une intervention longue, compliquée et minutieuse, impliquant entre autres un démontage partiel de l'appareil.

Il existe par ailleurs des appareils de distribution de boisson alimentés par une bonbonne. Un des avantages lors de l'utilisation d'eau en bonbonne est que celle-ci est dispensée dans l'appareil de distribution en toute hygiène. Il n'est pas nécessaire de la traiter pour en retirer du chlore par exemple pour qu'elle soit potable. Une fois la bonbonne vide, celle-ci doit être remplacée, ce qui est généralement une opération désagréable car une bonbonne d'eau pleine est très lourde, sans compter le risque d'être à court de réserve de bonbonne. Toutefois, pour un appareil destiné à distribuer de l'eau à une température autre qu'ambiante par exemple, l'eau de la bonbonne est provisoirement stockée dans un réservoir avant d'être délivrée par un robinet dans un récipient en vue d'être bue par exemple.

On connait par exemple le document EP 0 905 084 qui décrit un appareil de distribution de boisson alimenté par une bonbonne. L'eau en sortie de la bonbonne est provisoirement stockée dans un réservoir amovible comprenant un compartiment supérieur pour de l'eau à température ambiante, et un compartiment inférieur pour de l'eau refroidie. Pour cela, le compartiment inférieur est entouré d'un circuit de refroidissement. L'eau froide est acheminée à un robinet par un premier conduit et l'eau tempérée est acheminée à un autre robinet par un deuxième conduit. Afin d'éviter une insertion de poussière ou autres contaminants, l'appareil comprend en outre un filtre au niveau d'une entrée d'air dans le réservoir amovible permettant de faire entrer de l'air dans la bonbonne lorsqu'elle se vide de son eau. Il est par conséquent nécessaire de changer régulièrement les filtres ce qui est généralement une opération longue et compliquée qui requiert au moins un démontage partiel de l'appareil. Indépendamment, il est préférable de nettoyer, voire changer occasionnellement le réservoir et/ou les conduits pour des questions de propreté. A chaque retrait ou changement d'élément, il est alors nécessaire d'ouvrir l'appareil, de séparer les différents composants, de retirer (pour le nettoyer) ou remplacer l'élément considéré puis de raccorder l'ensemble avec l'élément nettoyé ou remplacé. Par exemple, lorsqu'il faut changer le réservoir, il doit être détaché des conduits et du filtre d'entrée, puis un nouveau réservoir doit être rattaché au filtre et aux conduits. Ce type de manipulation requiert aussi un démontage partiel de l'appareil et nécessite des vérifications nombreuses par exemple pour s'assurer de l'étanchéité de l'ensemble.

Par ailleurs, dans le document DE 203 12 951 est décrit un réservoir tel que défini dans le préambule de la revendication 1.

La présente invention vise à remédier au moins en partie aux inconvénients précités, et à proposer un réservoir permettant un remplacement du circuit d'eau à distribuer facile et rapide en toute hygiène.

A cet effet est proposé un réservoir amovible pour un appareil de distribution de boisson, notamment apte à être raccordé à un réseau d'eau courante, le réservoir comprenant au moins une chambre de stockage, une première embouchure formant une entrée, et une deuxième embouchure formant une sortie apte à être reliée à un robinet de distribution d'eau, le réservoir comprenant en outre au moins un moyen de filtration d'eau raccordé fluidiquement à la deuxième embouchure du réservoir en aval de la chambre de stockage, et le réservoir étant caractérisé en ce que la première embouchure, la deuxième embouchure, et un contenant pour y loger le moyen de filtration communiquant avec la deuxième embouchure forment un bloc fixé à un goulot du réservoir de sorte à former un ensemble indémontable.

Selon l'invention, la première embouchure, la deuxième embouchure, et un contenant du filtre pour y loger au moins un moyen de filtration communiquant avec la deuxième embouchure forment un bloc.

On entend ici par bloc, qu'au moins la première embouchure, la deuxième embouchure, et le contenant du filtre communiquant avec la deuxième embouchure forment un ensemble solidaire, par exemple par collage, soudage, encliquetage ou encore par un moulage de façon monobloc, de sorte qu'il n'est pas possible de les dissocier sans abimer voir détruire le bloc, ou de sorte que le bloc est indémontable au sens où s'il est démonté il est impossible de le reconstituer de sorte qu'il soit fonctionnel.

Il est alors facile de remplacer l'ensemble du circuit qui comprend les filtres, sans nécessité de démonter l'ensemble, ce qui permet un gain de temps d'intervention. Et par exemple, si un tel réservoir est installé sur une fontaine chez un particulier, il est impossible de faire intervenir un technicien pour nettoyer le circuit ou remplacer les filtres. Et il est difficile pour un particulier de procéder à une intervention de nettoyage de lui-même. Un réservoir selon l'invention permet ainsi un retrait facile du réservoir et des principaux éléments du circuit de distribution de boisson.

Et par exemple, le bloc comprend une plateforme présentant sur une face supérieure au moins la première embouchure et la deuxième embouchure, et sur une face inférieure au moins le contenant du filtre communiquant avec la deuxième embouchure, par exemple via un trou formé dans la plateforme qui soit à la fois en vis-à-vis de la deuxième embouchure et du contenant du filtre correspondant. Le contenant du filtre est alors par exemple inséré dans un goulot du réservoir.

Selon un exemple de réalisation privilégié, la plateforme, la première embouchure, la deuxième embouchure et le contenant sont moulés d'une seule pièce, par exemple en matière plastique.

La plateforme forme par exemple un couvercle du réservoir.

Par ailleurs, selon l'invention, le bloc, et de préférence la plateforme, est fixé, voire solidarisé, à un goulot du réservoir, ou par exemple sur un bord du goulot du réservoir, optionnellement de manière étanche. On entend par « fixé » que le bloc est par exemple soudé, collé, clipsé de façon irréversible, ou encore par exemple relié par thermosoudage.

Tous les éléments en contact avec l'eau sont ainsi solidaires les uns des autres pour garantir une meilleure hygiène et faciliter davantage le remplacement des filtres et du réservoir sans avoir à opérer un démontage et un remontage de tout le dispositif. Il est en outre possible de se dispenser ainsi d'avoir à procéder à un détartrage et/ou à une débactérisation en introduisant dans le circuit des produits chimiques, ce qui doit être suivi d'un rinçage à l'eau claire, ce qui est une opération longue et fastidieuse. Est ainsi formé un réservoir avec filtre intégré d'un seul tenant, ce qui permet de changer le circuit hydraulique d'un appareil de distribution de boisson de manière particulièrement rapide et commode.

Selon l'invention encore, la première embouchure forme une entrée du réservoir, et la deuxième embouchure forme une première sortie du réservoir, par exemple pour puiser de l'eau dans la première chambre.

Il est alors possible de filtrer l'eau après le stockage dans le réservoir, alors qu'un des inconvénients avec des dispositifs selon l'art antérieur est que l'eau est filtrée avant son stockage, et par conséquent, il n'y a pas de chlore dans le réservoir, même dans le cas d'un appareil relié à un réseau d'eau courante, pour protéger l'eau et contribuer à prévenir des contaminations possibles dans le circuit. Ainsi, le moyen de filtration d'eau raccordé fluidiquement à la deuxième embouchure est avantageusement un moyen de filtration destiné à retenir le chlore présent dans l'eau stockée dans le réservoir.

De plus, tous les éléments en contact avec l'eau sont ainsi mitoyens les uns des autres pour garantir une meilleure hygiène et faciliter le remplacement des filtres et du réservoir sans avoir à opérer un démontage et un remontage de tout le dispositif.

On entend ici par chambre que le réservoir comprend une zone pour stocker de l'eau à une certaine température.

Selon un exemple de réalisation, le réservoir comprend en outre une deuxième chambre de stockage. Il comprend aussi avantageusement en option au moins un moyen de filtration raccordé fluidiquement à une troisième embouchure formant une deuxième sortie.

Une deuxième chambre permet ainsi par exemple de stocker dans le réservoir de l'eau à une deuxième température. Par exemple, la deuxième chambre est située au-dessus de la première chambre, et la deuxième température est alors supérieure à la première température. Autrement dit, la chambre positionnée en haut du réservoir stocke de préférence de l'eau plus chaude que l'eau stockée dans la chambre située en bas du réservoir. Par exemple, la première chambre stocke de l'eau froide, i.e. vers 5-10°C (degré Celsius), et la deuxième chambre stocke de l'eau tempérée, i.e. vers 10-15°C typiquement. Selon un autre exemple, le réservoir peut également stocker de l'eau tempérée en bas (dans la première chambre) et de l'eau chaude en haut (dans la deuxième chambre). Voire, le réservoir peut comprendre plus de deux chambres pour pouvoir par exemple stocker simultanément de l'eau froide (en bas) de l'eau tempérée (au milieu) et de l'eau chaude (en haut). Le réservoir comprend alors optionnellement un rétrécissement de section entre deux chambres consécutives pour minimiser des échanges thermiques possibles entre des volumes d'eau contenus dans chacune des chambres. Un tel réservoir a par exemple une forme de serpentin.

Le réservoir comprend alors avantageusement une sortie par chambre, avec si nécessaire un conduit interne permettant d'aller puiser de l'eau dans la chambre correspondante. Par exemple, au moins un conduit interne est relié à la deuxième embouchure qui forme alors par exemple la première sortie et débouche au fond du réservoir pour puiser de l'eau dans la chambre située en bas du réservoir, i.e. par exemple la première chambre.

Et optionnellement, le moyen de filtration raccordé fluidiquement à la deuxième embouchure est situé dans un corps du réservoir.

Situer le moyen de filtration à l'intérieur de réservoir rend le réservoir plus ergonomique du fait qu'un minimum d'élément en dépasse. En outre, le réservoir est ainsi mieux préserver des contaminations possibles et le filtre est protégé d'éléments extérieurs.

Par exemple, dans une configuration selon laquelle le moyen de filtration raccordé fluidiquement à la deuxième embouchure est présent à l'intérieur du réservoir, le conduit interne est alors raccordé sous le filtre pour être relié à la deuxième embouchure.

De plus, si le réservoir comprend une troisième embouchure formant une deuxième sortie pour une deuxième chambre, optionnellement également munie d'un filtre, le moyen de filtration raccordé fluidiquement à la troisième embouchure est par exemple situé dans un corps du réservoir. Et de même, si nécessaire, la troisième embouchure présente un conduit interne, optionnellement relié sous le filtre correspondant si celui-ci est situé dans le réservoir.

Et selon un exemple privilégié de réalisation, chaque embouchure formant une sortie est munie d'un filtre, ou d'un conduit interne ou des deux. C'est-à-dire par exemple au moins la deuxième embouchure, voire la troisième embouchure.

Et par exemple, la première embouchure est raccordée fluidiquement à au moins un moyen de filtration.

Selon un mode de réalisation intéressant, la première embouchure comprend un raccord rapide permettant d'installer le réservoir dans un appareil de distribution d'eau sans nécessiter d'outils particuliers. La première embouchure formant alors une entrée, permet d'alimenter le réservoir en boisson, par exemple grâce à une bonbonne ou via un réseau d'eau courante.

Optionnellement, le moyen de filtration raccordé fluidiquement à la première embouchure est situé dans un corps du réservoir.

Ainsi, le positionnement d'au moins un des filtres dans le corps du réservoir, voire de tous les filtres existants, permet entre autres de protéger le ou les filtres lors de manutentions du réservoir.

Selon un exemple préféré de réalisation, chaque filtre comprend un contenant définissant un logement, au moins un moyen de filtration (éléments actifs) à insérer dans le contenant, et une membrane formant un fond du logement.

Le contenant peut avoir n'importe quelle forme. Toutefois, un contenant en forme de cylindre droit à section circulaire est le plus commode.

La membrane permet de filtrer d'éventuelles particules résiduelles. Elle est par exemple composée d'un maillage, par exemple en tissu tendu sur un anneau en plastique, ou d'une pièce en plastique comprenant des trous de quelques microns pour pouvoir filtrer des particules très fines.

Les moyens de filtration sont de tout type de média filtrant. De préférence, si l'entrée est munie d'un filtre, le moyen de filtration en entrée permet notamment de conserver du chlore dans le réservoir (i.e. le média filtrant du filtre d'entrée laisse passer le chlore) pour limiter des risques de contaminations par bactérie du réservoir, alors que chacun des filtres en sorties existants comprennent de préférence au moins un moyen de filtration permettant d'absorber le chlore, afin de délivrer par exemple de l'eau potable sans chlore. Un moyen de filtration raccordé fluidiquement à une sortie d'eau comprend par exemple un filtre à particules et des charbons en poudre ou en granulés. Un filtre à charbon compressé, appelé « carbon block » selon la terminologie anglo-saxonne, peut aussi faire office de filtration mécanique.

Il est aussi possible d'ajouter un filtre mécanique qui bloque les bactéries, appelé filtre microbiologique, à maille entre 0,05 et 0,25 µm, de préférence à 0,15 µm.

Selon un exemple de réalisation, le moyen de filtration raccordé fluidiquement à la deuxième embouchure comprend au moins du charbon actif, éventuellement associé à un filtre microbiologique. De même, le cas échéant, le moyen de filtration raccordé fluidiquement à la troisième embouchure comprend au moins du charbon actif, éventuellement associé à un filtre microbiologique.

Indépendamment, ou conjointement, le moyen de filtration raccordé fluidiquement à la première embouchure comprend des moyens de filtration pour filtrer les particules et sédiments pour éliminer les particules fines de l'eau, qui sont par exemple un filtre mécanique pour retenir des sédiments et/ou particules, et/ou une résine filtrante et/ou des sels d'argent (pour éliminer les bactéries), ou une combinaison de ceux-ci. La résine est optionnellement chargée en argent par exemple.

Différentes combinaisons sont bien entendu possibles.

Le charbon actif permet d'absorber le chlore. Optionnellement, une filtration est réalisée sur le charbon actif pour éliminer des matières affectant le goût et l'odeur et des micropolluants. Sur une entée, il est préférable de filtrer les particules fines. Ainsi, le filtre à particules relié à l'entrée est optionnellement adjoint d'une résine pour éliminer le calcaire, connue d'un homme du métier.

Optionnellement, un clapet anti-retour est relié à une embouchure.

Le clapet anti-retour est par exemple positionné après un moyen de filtration par rapport à l'embouchure, ou c'est-à-dire à l'opposé de l'embouchure par rapport à un moyen de filtration correspondant, limitant par exemple un contact entre le moyen de filtration et l'eau du réservoir lorsque de l'eau n'est pas puisée.

Selon un exemple de réalisation, un clapet anti-retour est relié à la première embouchure, formant l'entrée. L'eau comprise dans le réservoir est ainsi notamment empêchée de remonter dans un conduit d'arrivée d'eau.

Selon un autre exemple de réalisation, un clapet anti-retour est relié à la deuxième embouchure formant une première sortie, voire un autre clapet anti-retour est relié à la troisième embouchure si le réservoir comprend d'autres sorties.

La présence de clapets anti-retour aux niveaux de la sortie, ou des sorties si le réservoir en comprend plusieurs, permet notamment que le moyen de filtration d'une sortie ne baigne pas dans l'eau contenue dans le réservoir dans une configuration selon laquelle le niveau d'eau dans le réservoir immergerait au moins une partie des filtres. En effet, dans ce cas, le ou les clapets permettent de limiter un risque d'absorption du chlore contenu dans le réservoir, de sorte à limiter les contaminations possibles par exemple, ou que les moyens de filtration ne s'usent inutilement.

Chaque clapet anti-retour peut être de tout type possible, comme par exemple une membrane ou autre, à battant, guidé ou à billes par exemple.

Selon un mode de réalisation envisagé, le bloc comprend en outre la troisième embouchure, voire davantage d'embouchures. Et optionnellement, chacune des embouchures correspondent avec un logement pour un filtre correspondant. Chaque contenant de filtre est par exemple situé sur une face inférieure de la plateforme alors que chaque embouchure est située sur une face supérieure de la plateforme, ce qui permet par exemple de situer tous les filtres dans le corps du réservoir si cette option est souhaitée.

Par commodité, le réservoir comprend en outre par exemple au moins un robinet. Le robinet est par exemple raccordé à la deuxième embouchure. On entend ici par robinet un moyen de distribution de boisson.

Le réservoir comprend ainsi l'intégralité du circuit de distribution, qu'il est alors possible de changer avec un minimum de démontage.

Et optionnellement, le réservoir comprend un stérilisateur par rayon ultraviolet (UV) raccordé au robinet, ce qui permet de renforcer les mesures d'hygiène, en plus des différents filtres. Notamment à cause du fait qu'une extrémité du robinet étant en contact avec l'air ambiant, des bactéries pourraient remonter dans le réservoir par ce biais, ou du moins contaminer le robinet. Un tel stérilisateur monté par exemple directement sur le robinet permet de limiter ce type de risque.

Selon encore un autre exemple de réalisation, le réservoir comprend un premier conduit de distribution raccordant la deuxième embouchure par exemple, à un robinet. Le robinet est par exemple directement préfixé sur le réservoir ou est un robinet d'une fontaine.

Il est ainsi possible de pouvoir changer une majeure partie du circuit en une seule opération pour entretenir la machine. Un telle opération est ainsi plus rapide, plus hygiénique et permet d'engendrer moins de risques d'erreurs de montage ou démontage par exemple, et par conséquent moins de risques d'usure, d'endommagement ou casse de certains éléments.

Ainsi, par exemple, au moins une partie voir tous les éléments sont optionnellement fixés les uns aux autres, par exemple par collage, soudage, ou encore clipsage irréversibles, de sorte qu'une fois assemblés, toute tentative de désassemblage engendrerait une détérioration rendant l'ensemble inopérant, non-fonctionnel, inefficace.

D'une façon plus générale, si la question d'hygiène ne se pose pas, serait également proposé selon un autre aspect de l'invention un réservoir muni d'un filtre indifféremment positionné en entrée ou en sortie, formant ainsi un kit aisément remplaçable.

La présente invention vise aussi un appareil de distribution de boisson, notamment apte à être raccordé sur un réseau d'eau courante, comprenant une enceinte, une arrivée d'eau destinée à être reliée à un conduit d'arrivée d'eau du réseau d'eau courante, et au moins un robinet de distribution d'eau, caractérisé en ce qu'il comprend un réservoir amovible tel que défini précédemment, dont la chambre de stockage est située au moins en partie dans l'enceinte.

Un tel réservoir présente optionnellement tout ou partie des caractéristiques exposées précédemment, lui conférant des avantages analogues.

Un tel appareil permet ainsi un échange facile et rapide du réservoir, c'est-à-dire un remplacement d'une majeure partie voire de tout le circuit de distribution d'eau pour l'entretien de la machine.

L'appareil comprend en outre traditionnellement une arrivée d'eau, ou de quelque autre boisson, pour y raccorder par exemple une bonbonne ou un réseau d'eau courante.

Selon un mode intéressant de réalisation, l'appareil est destiné à être raccordé à un réseau d'eau courante. La première embouchure est alors par exemple raccordée à une arrivée d'eau de l'appareil et l'appareil comprend une électrovanne de blocage de pression située entre la première embouchure du réservoir et l'arrivée d'eau de l'appareil.

La présence d'une telle électrovanne permet de se dispenser de bac tampon pour temporiser la pression, tout en évitant que le réservoir subisse en permanence la pression du réseau d'eau courante. En effet, un bac tampon permet généralement de mettre le réservoir hors pression du réseau d'eau. Avec une telle électrovanne, le réservoir, et plus généralement tout le circuit de distribution d'eau de l'appareil, est maintenu hors pression du réseau d'eau courante sans nécessiter de recourir à un bac tampon. Il est en outre préférable de se dispenser d'un bac tampon pour des raisons d'hygiène et limiter le nombre d'éléments du circuit d'eau de l'appareil à nettoyer ou changer régulièrement.

De plus, l'appareil comprend avantageusement en outre un réducteur de pression en amont de l'électrovanne.

Un tel réducteur de pression est par exemple positionné entre l'arrivée d'eau et l'électrovanne. Un réducteur de pression permet notamment de réduire la pression d'eau du réseau d'eau courante et de la maintenir constante.

Selon une autre caractéristique additionnelle intéressante, l'appareil comprend un robinet qui est muni d'un actionneur équipé d'un bouton et de microcontacts électriques pour actionner l'électrovanne.

Il est ainsi possible de choisir de remplir le réservoir avec de l'eau du réseau d'eau courante.

Un tel actionneur présente par exemple trois positions. Une position de repos dans laquelle un conduit de distribution correspondant est pincé, aucune eau ne circule dans l'appareil ni n'en sort pour remplir un gobelet par exemple. Une première position de service dans laquelle le bouton est appuyé jusqu'à atteindre une première position permettant de libérer un écoulement dans le conduit de distribution correspondant, i.e. de libérer le pincement. Dans cette position, le réservoir se vide pour distribuer de l'eau, remplir un gobelet par exemple. Et une deuxième position de service dans laquelle le bouton est appuyé jusqu'à atteindre une deuxième position permettant non seulement de libérer l'écoulement dans le conduit de distribution correspondant mais en plus d'ouvrir l'électrovanne ce qui permet de simultanément remplir le réservoir alors qu'il se vide pour distribuer de l'eau, remplir un gobelet par exemple. A défaut, l'électrovanne est donc par exemple fermée de sorte que l'ensemble du circuit n'est pas sous une alimentation constante d'eau du réseau d'eau courante.

Ainsi, peut également être considéré comme un aspect de l'invention original en soi un appareil de distribution de boisson à brancher sur un réseau d'eau courante comprenant une arrivée d'eau destinée à être reliée à un conduit d'arrivée d'eau du réseau d'eau courante, et au moins un robinet de distribution d'eau, l'appareil comprenant en outre une électrovanne de blocage de pression située entre une entrée d'un réservoir et l'arrivée d'eau, optionnellement un réducteur de pression en amont de l'électrovanne, et un actionneur équipé d'un bouton et de microcontacts électriques pour actionner l'électrovanne apte à prendre une position de repos dans laquelle le circuit de distribution d'eau est bloqué (l'électrovanne est fermée), une première position de service dans laquelle le réservoir se vide pour distribuer de l'eau (l'électrovanne étant aussi fermée) et une deuxième position de service dans laquelle le réservoir se vide pour distribuer de l'eau et l'électrovanne est ouverte pour remplir le réservoir avec de l'eau du réseau d'eau courante.

Un tel appareil comprend en outre optionnellement un réservoir amovible tel que décrit précédemment, avec tout ou parties des caractéristiques mentionnées, engendrant des avantages analogues.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 présente en perspective et en transparence un réservoir selon un premier exemple de réalisation de la présente invention,
La figure 2 présente le réservoir de la figure 1 de côté en transparence,
La figure 3 montre un éclaté du réservoir de la figure 1,
La figure 4 présente un autre éclaté du réservoir de la figure 1,
La figure 5 illustre en détails une partie supérieure du réservoir de la figure 1, en transparence,
La figure 6 présente schématiquement en perspective un appareil de distribution de boisson selon un premier exemple de réalisation de la présente invention, comprenant un réservoir amovible tel que représenté figure 1,
La figure 7 montre schématiquement l'appareil de distribution de boisson de la figure 6 de côté,
La figure 8 illustre un actionneur vu de dessus selon un exemple de réalisation,
La figure 9 présente une coupe de l'actionneur de la figure 8,
La figure 10 représente un réservoir selon un deuxième mode de réalisation de la présente invention,
La figure 11 représente le réservoir de la figure 10 en éclaté,
La figure 12 représente un réservoir selon un troisième mode de réalisation de la présente invention,
Les figures 13, 14 et 15 présentent un appareil de distribution selon un deuxième mode de réalisation,
La figure 16 représente un réservoir selon un quatrième mode de réalisation de la présente invention,
La figure 17 représente le réservoir de la figure 16 en éclaté,
La figure 18 représente le réservoir de la figure 16 en éclaté et en transparence,
La figure 19 représente le réservoir de la figure 16 en transparence, et
La figure 20 illustre la présence de clapet anti-retour.

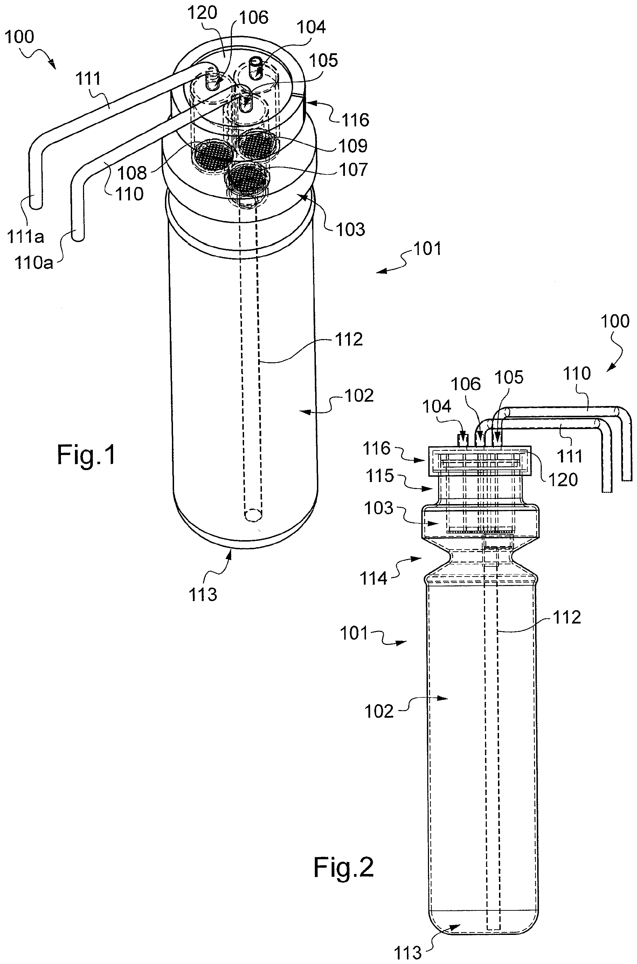

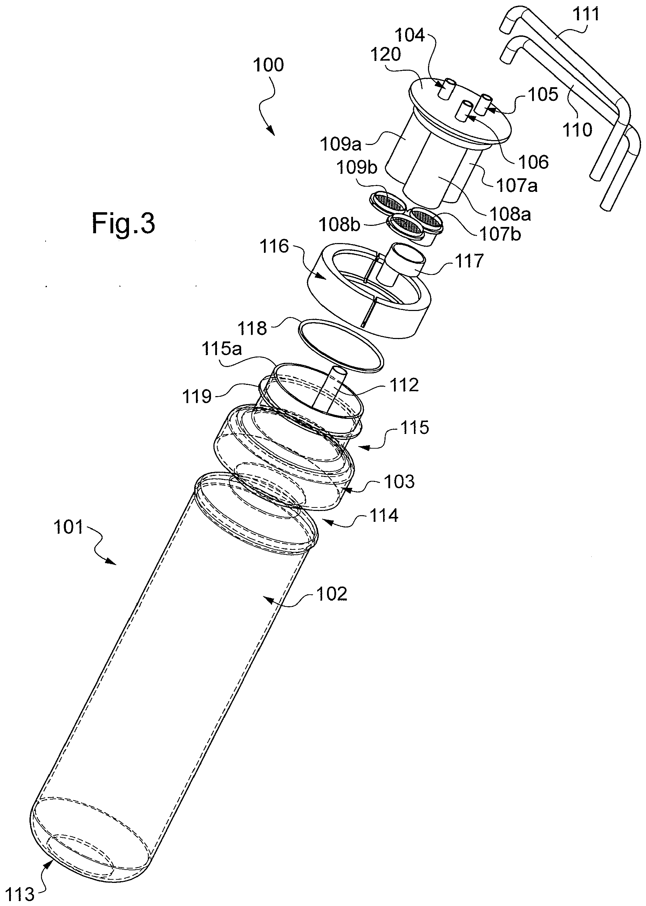

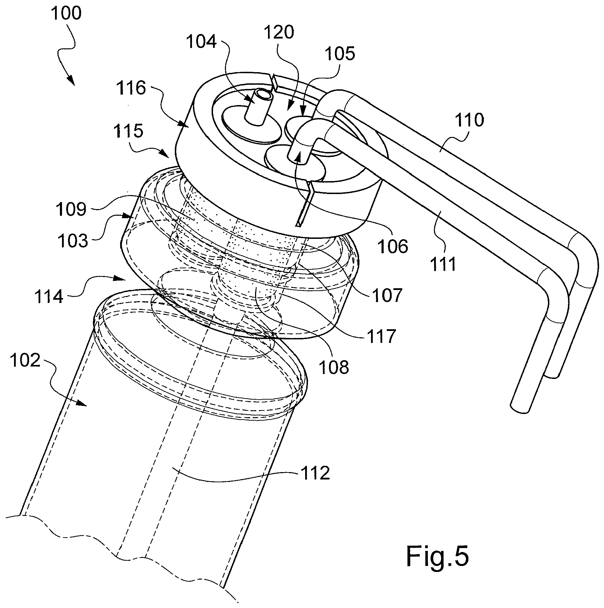

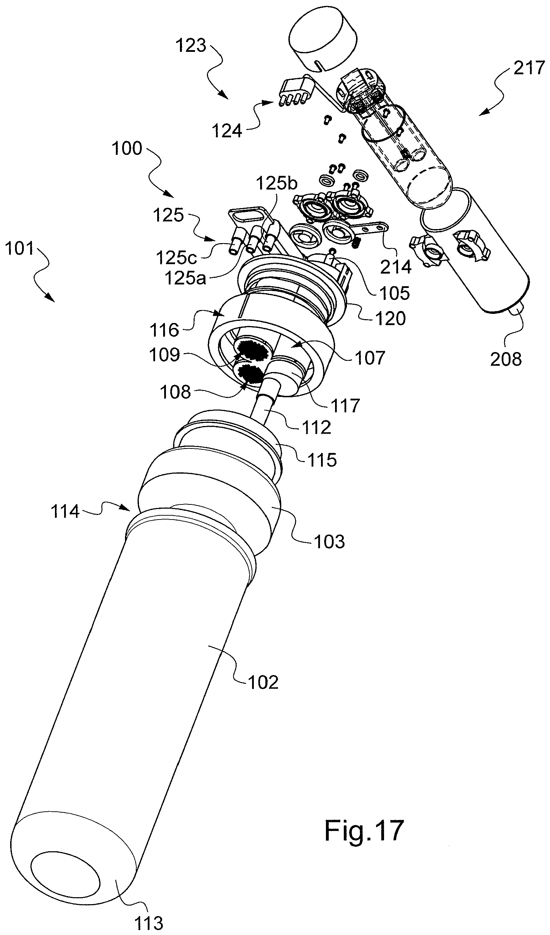

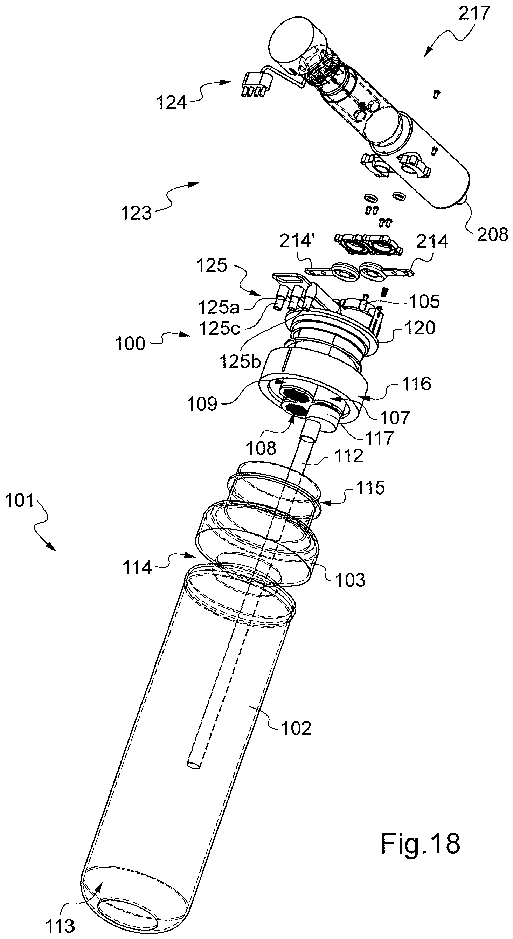

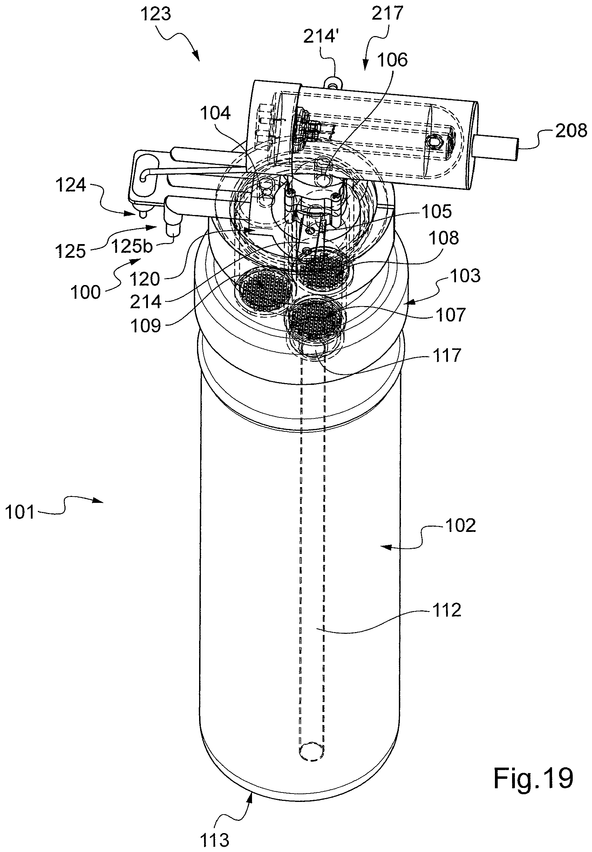

Les éléments identiques représentés sur les figures 1 à 20 sont identifiés par des références numériques identiques.

Selon l'invention, un réservoir 101 comprend une première chambre de stockage 102, une première embouchure 104, formant ici une entrée, et une deuxième embouchure 105, formant ici une première sortie pour puiser une boisson dans la première chambre 102.

Un premier conduit de distribution d'eau 110 est raccordé à la deuxième embouchure 105 du réservoir hors du corps du réservoir, et le réservoir comprend en outre un filtre 107 relié à la deuxième embouchure 105 du réservoir 101 en étant ici situé à l'intérieur du corps du réservoir 101.

Selon un aspect optionnel de l'invention, la première embouchure 104, la deuxième embouchure 105, et un contenant 107a du filtre 107 définissant un logement pour y recevoir au moins un moyen de filtration communiquant avec la deuxième embouchure 105 forment ici un bloc 100.

Dans l'exemple de réalisation des figures 1 à 5, la première embouchure 104 est munie d'un filtre 109 situé à l'intérieur du corps du réservoir, et le réservoir 101 comprend en outre une deuxième chambre 103 et un filtre 108 relié à une troisième embouchure 106, formant ici une deuxième sortie pour puiser une boisson dans la deuxième chambre 103, et également situé à l'intérieur du corps du réservoir 101.

De plus, le réservoir 101 amovible comprend ici un deuxième conduit 111 de distribution de boisson qui est raccordé à la troisième embouchure 106 du réservoir 101 hors du réservoir 101.

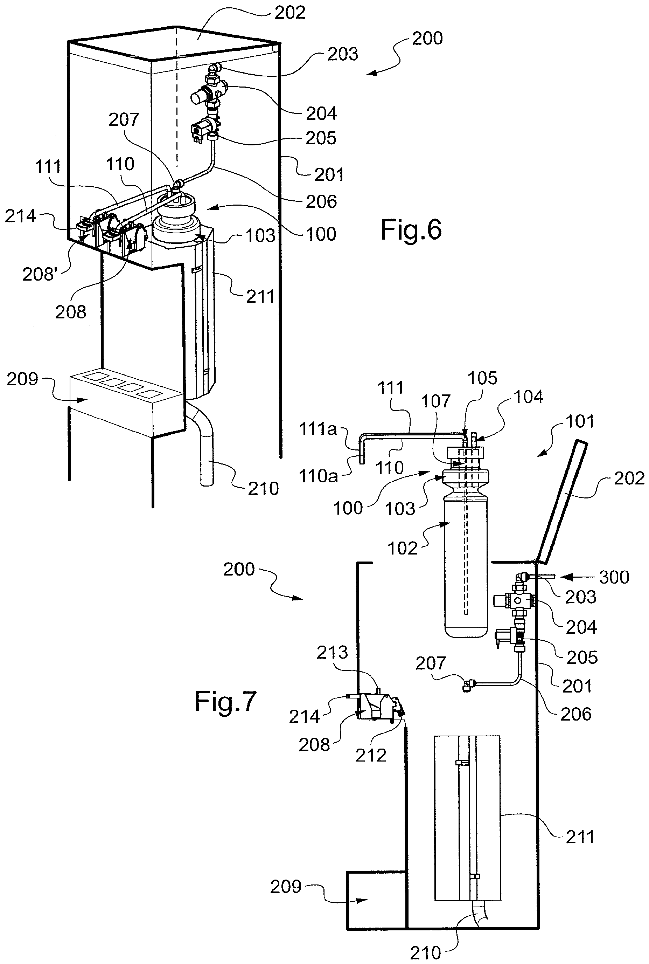

Comme l'illustre par exemple la figure 2, la deuxième chambre 103 est ici positionnée au-dessus de la première chambre 102, dans un corps même du réservoir. La deuxième chambre 103 est par exemple destinée à comprendre de l'eau à température ambiante, alors que la première chambre 102 est par exemple destinée à comprendre de l'eau refroidie, par exemple autour de 5-10°C. Pour limiter de potentiels échanges thermiques entre les volumes d'eau compris dans la première chambre 102 et la deuxième chambre 103, la première chambre 102 et la deuxième chambre 103 sont avantageusement séparées par un rétrécissement de section 114. De plus, on remarque par exemple que la deuxième chambre 103 (du moins la chambre supérieure) présente une dimension (ici par exemple un diamètre si le réservoir présente globalement une forme cylindrique) sensiblement plus importante que celle de la première chambre 102. Ceci est notamment pratique lorsque le réservoir 101 est inséré dans une enceinte 211 d'un appareil 200, qui est par exemple une enceinte réfrigérée, aussi dénommée compartiment de réfrigération. En effet, dans ce cas, il est intéressant qu'au moins la dimension de la deuxième chambre 103 permette à la deuxième chambre 103 de rester positionnée au-dessus de l'enceinte 211 (comme le montre par exemple la figure 6) alors que l'intégralité de la première chambre 102 est insérée dans l'enceinte 211.

Le réservoir 101 présente ici une forme globalement cylindrique avec un corps principalement formé ici par un fond 113, la première chambre 102, la deuxième chambre 103 optionnellement, et un goulot 115.

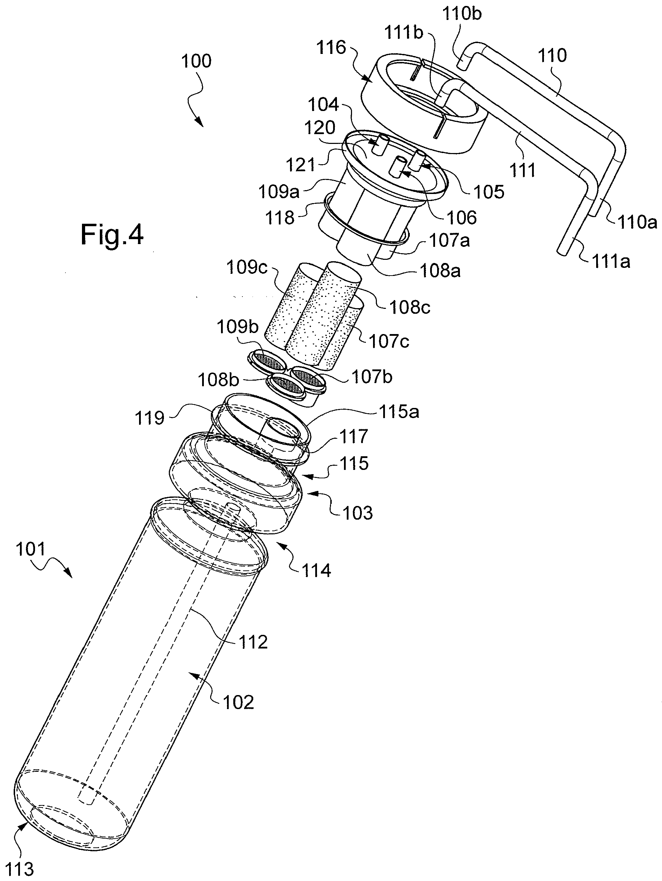

Dans une partie supérieure, le réservoir 101 comprend le bloc 100 qui comprend ici une plateforme 120 présentant, sur une face supérieure, la première embouchure 104, la deuxième embouchure 105 et la troisième embouchure 106, et sur une face inférieure des contenants 107a, 108a et 109a des filtres 107, 108 et 109. Un tel ensemble composé de la plateforme 120, de la première embouchure 104, de la deuxième embouchure 105, de la troisième embouchure 106, et des contenants 107a, 108a et 109a des filtres 107, 108 et 109 est par exemple moulé en une seule pièce, par exemple de plastique, formant ainsi le bloc 100 selon un exemple de réalisation. Dans le présent exemple de réalisation, la plateforme 120 présente une forme de disque, optionnellement entourée d'une collerette (visible figure 4) qui est par exemple destinée à former un joint d'étanchéité en coopérant avec une couronne 116. De plus, la première embouchure 104, la deuxième embouchure 105, la troisième embouchure 106, et les contenants 107a, 108a et 109a des filtres 107, 108 et 109 présentent ici une forme de cylindre rectiligne à section circulaire ce qui est particulièrement commode à réaliser, notamment à mouler ; les contenants 107a, 108a et 109a des filtres 107, 108 et 109 présentant de préférence des diamètres plus grand (typiquement de 30 à 60 mm) que ceux de la première embouchure 104, de la deuxième embouchure 105, et de la troisième embouchure 106 qui mesurent, quant à eux, typiquement moins de 10 mm (millimètres). De plus, la première embouchure 104, la deuxième embouchure 105, et la troisième embouchure 106 débouchent dans les contenants 107a, 108a et 109a des filtres 107, 108 et 109 par des trous (non visibles) formés dans la plateforme 120 afin que l'eau, ou toute boisson, puisse circuler.

Les contenants 107a, 108a et 109a des filtres 107, 108 et 109 reçoivent des moyens de filtration 107c, 108c et 109c respectivement.

Le filtre 109 de la première embouchure 104 est par exemple un filtre d'entrée. Il comprend alors typiquement des moyens de filtration 109c pour filtrer des sédiments et/ou des particules et pour laisser passer du chlore dans le réservoir 101 pour le prémunir de contaminations.

Les moyens de filtration 107c, 108c du filtre 107 de la deuxième embouchure 105, formant par exemple une première sortie, et du filtre 108 de la troisième embouchure 106, formant par exemple une deuxième sortie, comprennent, quant à eux, typiquement du charbon actif pour filtrer le chlore présent dans l'eau et éviter qu'il ne soit ingéré par un utilisateur de l'appareil 200. D'autres moyens de filtrations peuvent être ajoutés.

Pour maintenir les moyens de filtration 107c, 108c, 109c dans leur contenant 107a, 108a, 109a respectif, les contenants 107a, 108a, 109a sont clos par une membrane 107b, 108b, 109b venant se fixer à une extrémité libre du contenant 107a, 108a, 109a correspondant, c'est-à-dire leur extrémité opposée aux embouchures.

Optionnellement, comme c'est le cas dans cet exemple, un conduit interne 112 est fixé au filtre 107 de la deuxième embouchure 105 grâce à une bague 117. Le conduit interne 112 forme ainsi une sorte de paille permettant d'aller puiser l'eau dans la première chambre 102. Le conduit interne 112 débouche le plus profondément possible dans le réservoir 101, par exemple à proximité du fond 113 du réservoir 101.

Dans le présent exemple de réalisation, il n'est pas nécessaire de munir le filtre 108 de la troisième embouchure 106 d'un conduit interne analogue du fait qu'une extrémité inférieure du filtre 108, i.e. ici l'extrémité libre comprenant la membrane 108b, arrive à proximité d'un niveau inférieur de la deuxième chambre 103.

D'autres configurations sont bien entendu envisageables dans lesquelles chaque sortie du réservoir, munie ou non d'un filtre, pourrait être munie d'un conduit interne débouchant le plus profondément possible dans la chambre correspondante.

Dans un cas général, si le réservoir comprend plusieurs chambres avec un même nombre de sorties munies chacune d'un filtre, il est avantageux que les filtres présentent une extrémité inférieure positionnée au voisinage d'un fond de la chambre située le plus près des filtres, i.e. que la membrane d'au moins l'un des filtres si situe dans le bas de la chambre située le plus haut dans le réservoir pour pouvoir se dispenser d'au moins un conduit interne.

D'après le présent exemple de réalisation, on remarque en outre que le bloc 100 formé par la plateforme 120, la première embouchure 104, la deuxième embouchure 105, la troisième embouchure 106, et les contenants 107a, 108a et 109a des filtres 107, 108 et 109 est symétrique de sorte qu'en soi la première embouchure 104 est identique à la deuxième embouchure 105 et à la troisième embouchure 106. Ceci permet notamment un assemblage plus rapide car par exemple, une fois le premier conduit 110 sur l'une quelconque des embouchures (104, 105, 106), et le deuxième conduit 111 sur une quelconque autre embouchure (104, 105, 106), une troisième embouchure (104, 105, 106) devient alors l'entrée, et il est facile d'insérer dans les contenants 107a, 108a, 109a correspondant les moyens de filtration conseillés selon si le logement communique avec l'entrée (ici la première embouchure 104) ou les sorties (ici les deuxième et troisième embouchure 105, 106, i.e. les embouchures munies d'un conduit 110, 111).

Ainsi, pour l'assemblage du réservoir 101, le bloc 100 est par exemple inséré dans le goulot 115 du réservoir 101.

Pour cela, un joint 118 est avantageusement présent et se positionne le cas échéant dans une gorge 119 formée dans le goulot 115. Enfin la couronne 116 vient sceller l'ensemble de sorte qu'il n'est pas possible de le démonter ultérieurement sans le détruire.

Optionnellement, les conduits 110, et 111 le cas échéant, sont par exemple également scellé, par collage ou soudage ou autre, aux embouchures correspondantes de sorte que le réservoir 101 forme un tout indémontable permettant une insertion ou un retrait facile d'un seul tenant dans un appareil, de sorte qu'il est ainsi possible de changer l'ensemble du circuit de distribution de boisson en toute hygiène.

Outre le bloc 100 au moins composé de la plateforme 120, de la première embouchure 104, de la deuxième embouchure 105, de la troisième embouchure 106, et des contenants 107a, 108a et 109a des filtres 107, 108 et 109, les différents composants du réservoir 101 sont de préférence moulés. Par exemple, le réservoir 101 formé ici du fond 113, de la première chambre 102, du rétrécissement 114, de la deuxième chambre 103 et du goulot 115 est par exemple moulé par soufflage comme une bouteille d'eau standard.

Ainsi, un tel réservoir 101 amovible est particulièrement commode à insérer ou retirer d'un appareil de distribution de boisson 200.

En référence à la figure 6, un appareil 200 comprend un corps 201 avec un couvercle 202, ici en partie supérieure, permettant d'accéder au circuit de distribution de boisson, notamment pour installer ou retirer un réservoir 101 amovible.

L'appareil 200 comprend en outre un réservoir 101 amovible.

Une arrivée d'eau 203 permet par exemple de relier l'appareil 200 à un conduit d'arrivée d'eau du réseau d'eau courante 300.

La réservoir d'eau 101 est ici relié à l'arrivée d'eau 203 grâce à un conduit 206, une électrovanne 205 et un réducteur de pression 204 positionnés en série entre l'arrivée d'eau 203 de l'appareil et une première embouchure 104 du réservoir 101, formant une entrée.

Avantageusement, la première embouchure 104 est ici raccordée au conduit 206 grâce à un raccord rapide 207.

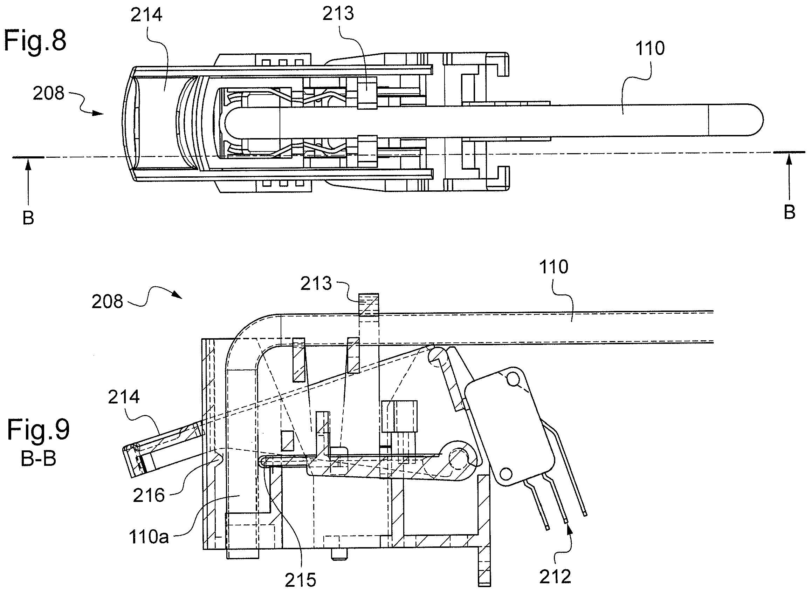

En sortie, le réservoir 101 est raccordé à un robinet de distribution d'eau 208 (qui comprend par exemple un actionneur dont un mode de réalisation est détaillé figures 8 et 9) par le conduit de distribution 110. Et en l'occurrence, le réservoir 101 comprenant deux chambres, un deuxième conduit de distribution 111 est raccordé à un autre robinet 208', de préférence identique au robinet 208.

Dans l'exemple de réalisation des figures 6 et 7, l'appareil 200 comprend une enceinte 211, par exemple réfrigérée, recevant la première chambre 102 du réservoir 101, la deuxième chambre 103 demeurant au-dessus de l'enceinte 211 pour contenir de l'eau à température ambiante par exemple.

Enfin, l'appareil comprend en outre ici un bac de récupération 209 permettant notamment de positionner un récipient tel qu'un gobelet pour le remplir, ainsi qu'un tuyau de vidange 210 permettant d'évacuer des eaux renversées par exemple.

Les figures 8 et 9 illustrent un exemple de réalisation d'un robinet 208 (un robinet 208' étant identique).

Le robinet 208 comprend ici un actionneur équipé d'un bouton 214 et de microcontacts électriques 212 pour actionner l'électrovanne 205.

En position de repos du robinet 208, un bec 110a du conduit de distribution 110 est pincé entre une mâchoire fixe 216 et une mâchoire mobile 215.

Lorsqu'un utilisateur appui sur le bouton 214, il induit une séparation des mâchoires 215 et 216 libérant un écoulement d'eau depuis le réservoir.

Lorsque le bouton 214 est dans une première position de service, seul le réservoir se vide.

Et lorsque le bouton 214 est dans une deuxième position de service, plus appuyée que la première, l'électrovanne est ouverte grâce à l'activation des microcontacts 212 ce qui permet de remplir simultanément de réservoir 101 en remplissant par ailleurs un récipient.

Ainsi, dans le présent exemple de réalisation, le réservoir 101 comprenant deux chambres 102, 103, il est avantageux que l'appareil comprennent deux robinets 208 et 208' pour pouvoir puiser au choix dans la première chambre 102 de l'eau froide, et dans la deuxième chambre 103 de l'eau tempérée par exemple.

Ainsi, l'installation et le retrait du réservoir 101 est très simple et permet de garantir une bonne hygiène dans tout le circuit de distribution d'eau puisqu'une partie du robinet 208 par laquelle l'eau s'écoule est formée par le bec 110a du conduit 110 (ou par le bec 111a du conduit 111 pour le robinet 208' par exemple). Le conduit 110 est maintenu en position par des griffes 213 permettant de clipper le conduit 110 dans l'actionneur du robinet 208. De préférence, le bouton 214 est simultanément enfoncé pour permettre une insertion du bec 110a. Parallèlement, l'entrée 104 est facilement raccordée à l'arrivée d'eau 203 par exemple grâce au raccord rapide 207.

Le réservoir 101 forme ainsi un tout solidaire permettant un changement facile et rapide du circuit de distribution en tout hygiène.

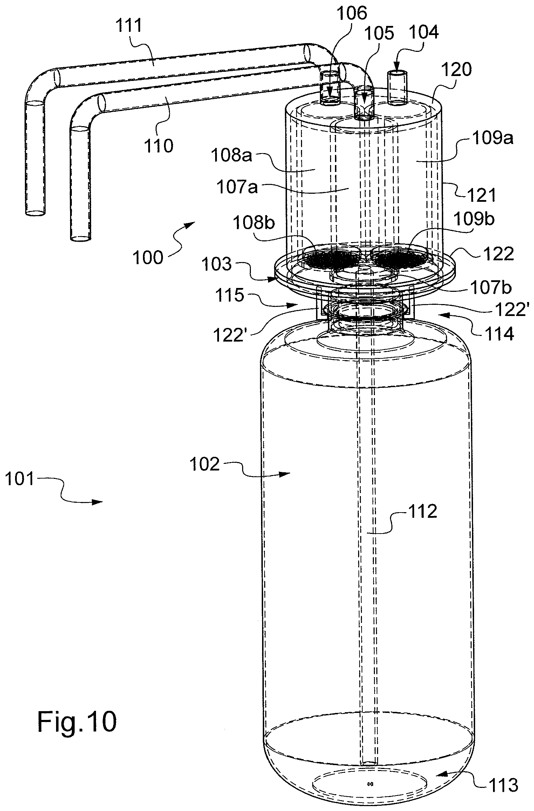

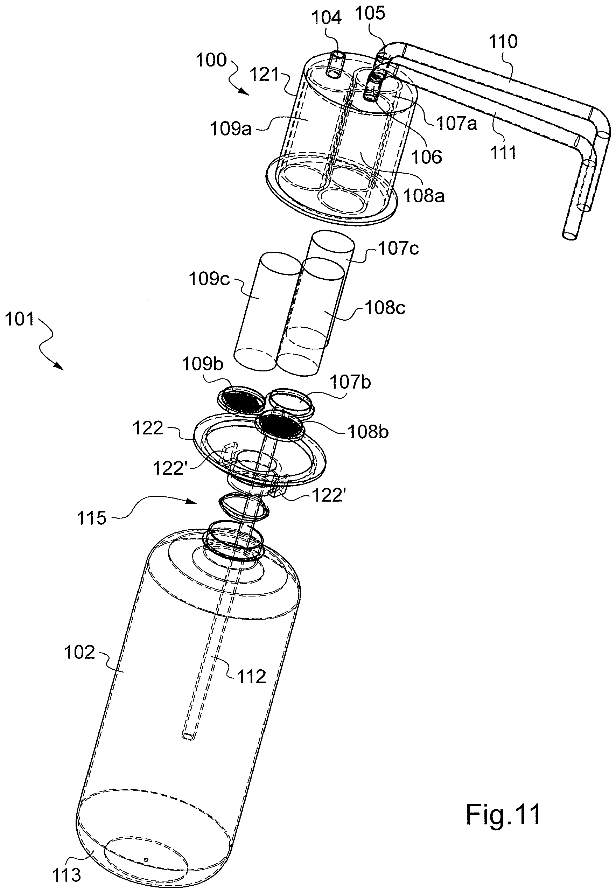

Les figures 10 et 11 présentent un deuxième exemple de réalisation d'un réservoir selon l'invention. Les éléments communs à l'exemple précédemment présenté ne sont pas décrits à nouveau. Ce deuxième exemple diffère du premier en ce que le bloc 100 est ici situé au-dessus du goulot 115. Pour cela, le bloc 100 comprend en outre un boitier 121, ici globalement cylindrique à section circulaire. Le boitier 121 est clos en partie supérieure par la plateforme 120, et comprend une partie inférieure 122 élargie pour former la deuxième chambre 103 et apte à coopérer avec le goulot 115, par exemple pour y être fixé de manière indémontable par des pates 122' permettant un clipsage du bloc 100 sur le goulot 115. Ainsi, on constate ici que la deuxième chambre 103 est formée par le bloc 100 et non par le corps du réservoir à proprement parler comme dans l'exemple précédent. Le goulot 115 sert ainsi ici de rétrécissement 114 entre la première chambre 102 et la deuxième chambre 103. De même que précédemment, la plateforme 120 présente ici une surface inférieure d'où s'étendent les contenants 107a, 108a, 109a des filtres, et une surface supérieure d'où d'étendent les embouchures 104, 105, 106. Les contenants 107a, 108a, 109a des filtres sont ainsi logés ici dans le boitier 121, au-dessus du goulot 115. Un tel réservoir est par exemple destiné à un appareil tel que représenté sur les figures 6 et 7, et les conduits 110, 111 sont par exemple apte à coopérer avec un robinet 208, 208' tel que représenté figures 8 et 9.

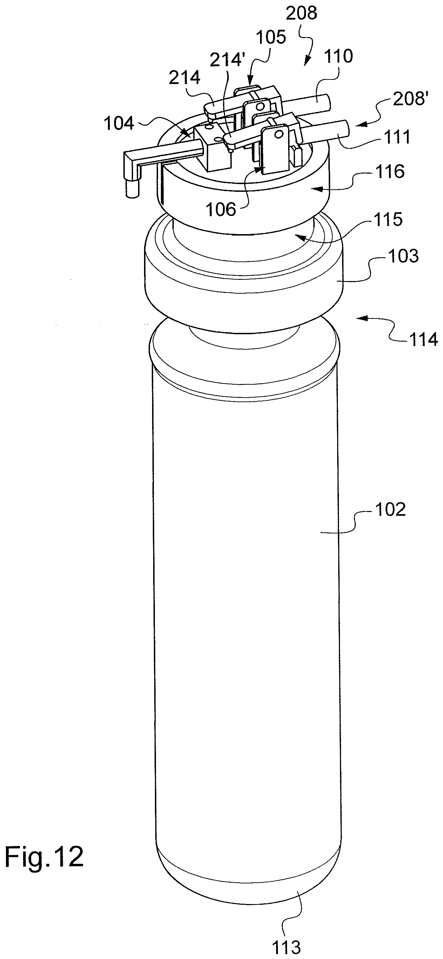

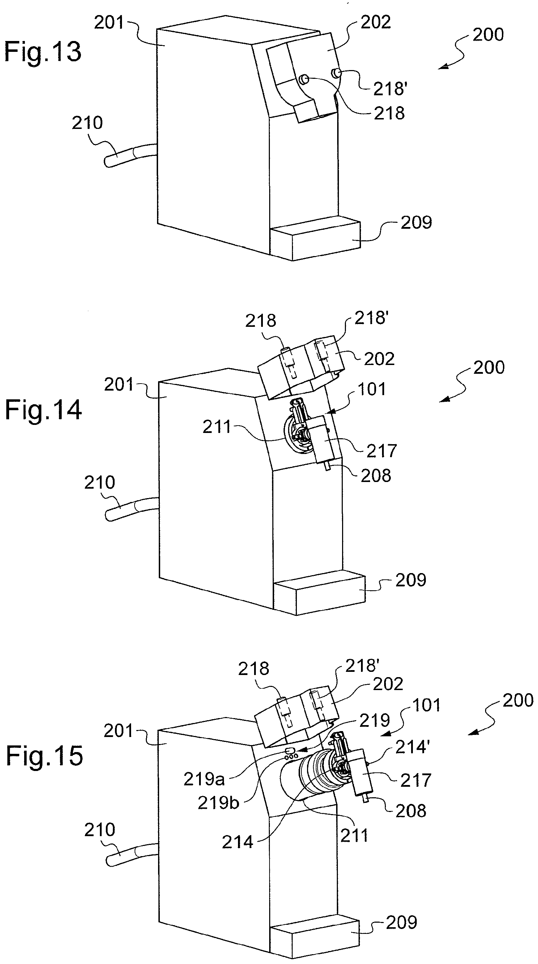

La figure 12 représente un réservoir selon un troisième mode de réalisation de la présente invention. Les éléments communs à l'exemple présenté sur les figures 1 à 5 ne sont pas décrits à nouveau. Ce mode de réalisation diffère par exemple de celui des figures 1 à 5 en ce que les robinets 208, 208' sont directement positionnés sur les embouchures 105, 106. Dans ce mode de réalisation, l'actionneur du robinet 208 (ou du robinet 208' qui lui est identique) est par exemple simplement composé d'un bouton 214 (ou 214') pinçant le conduit 110 (ou 111) lorsqu'il est en position de repos. Un tel mode de réalisation permet par exemple d'avoir un réservoir 101 extrêmement compact. De préférence, le robinet 208 (ou 208') est monté sur le réservoir de manière indémontable, i.e. de sorte que le réservoir 101 est au moins partiellement détérioré si le robinet subit une tentative de démontage, par exemple par collage, clipsage ou autres. Un tel réservoir est par exemple destiné à un appareil analogue à celui représenté sur les figures 13 à 15.

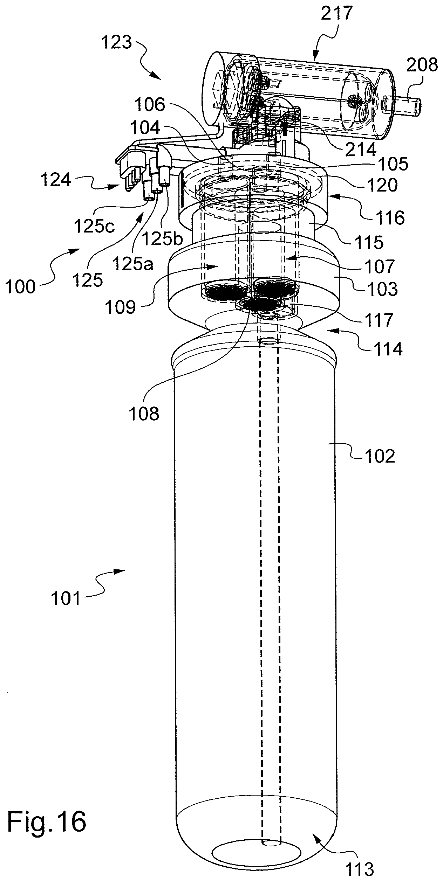

Les figures 13, 14 et 15 présentent un appareil 200 de distribution selon un deuxième mode de réalisation. Les éléments communs à l'exemple précédemment présenté ne sont pas décrits à nouveau. Un tel appareil permet par exemple un changement très facile et rapide du circuit de distribution de boisson. Ici, le couvercle 202 est positionné de préférence en façade de l'appareil 200. Le couvercle 202 comprend ici un interrupteur 218 pour activer un bouton 214 d'un robinet 208. Il comprend ici en outre un autre interrupteur 218' pour activer un bouton 214' formé de sorte que l'écoulement ait lieu au sein du même robinet 208. Autrement dit, le robinet 208 du réservoir 101 (tel que représenté par exemple figure 16 à 19) est ici un robinet unique qui comprend deux boutons 214, 214' pour puiser de la boisson respectivement dans la première chambre 102 et la deuxième chambre 103. L'appareil 200 selon ce deuxième mode de réalisation comprend en outre une interface de connectique 219 comprenant une connexion électrique 219a et une connexion fluidique 219b formée ici de trois orifices, pour y relier les embouchures 104, 105, 106 du réservoir 101 (par exemple tel que représenté sur les figures 16 à 19).

Les figures 16 à 19 représentent un réservoir 101 selon un quatrième mode de réalisation de la présente invention. Les éléments communs à l'exemple présenté sur les figures 1 à 5 ne sont pas décrits à nouveau. Un tel réservoir 101 diffère du mode de réalisation des figures 1 à 5 en ce qu'il comprend en outre un ensemble de distribution compact 123. Cet ensemble 123 comprend ici par exemple un stérilisateur par rayon ultraviolet 217 raccordé au robinet unique 208. Un tel stérilisateur, courant pour un homme du métier, n'est pas décrit en détail ici. Une fiche 124 permet par exemple de le raccorder à une connexion électrique 219a d'un appareil 200 tel que présenté précédemment. La fiche 124 permet par exemple d'alimenter électriquement le stérilisateur UV 217. Une prise fluidique 125 permet par exemple de raccorder le réservoir 101 à une connexion fluidique 219b d'un appareil 200 tel que présenté précédemment. La prise fluidique 125 comprend ici trois prises 125a, 125b, 125c, destinées à coopérer avec les trois orifices de la connexion fluidique 219b. Une première prise 125a, ici centrale, permet de raccorder la première embouchure 104 à une arrivée d'eau pour remplir le réservoir 101. Une deuxième prise 125b, ici située du côté de la deuxième embouchure 105, permet de raccorder la deuxième embouchure 105 à une sortie d'eau fraiche pour alimenter un carbonateur pour faire de l'eau gazeuse par exemple, en plus de sa liaison avec le bouton 214 pour être raccordé au robinet 208 en passant par le stérilisateur UV 217. De manière analogue, une troisième prise 125c, ici située du côté de la troisième embouchure 106, permet de raccorder la troisième embouchure 106 à une sortie d'eau à température ambiante pour alimenter un chauffe-eau par exemple, en plus de sa liaison avec le bouton 214' pour être raccordé au robinet 208 en passant par le stérilisateur UV 217. Au moins le stérilisateur UV 217, voir tout l'ensemble de distribution compact 123 est avantageusement assemblé avec le reste du réservoir 101 de manière indémontable, par exemple par collage et/ou soudage.

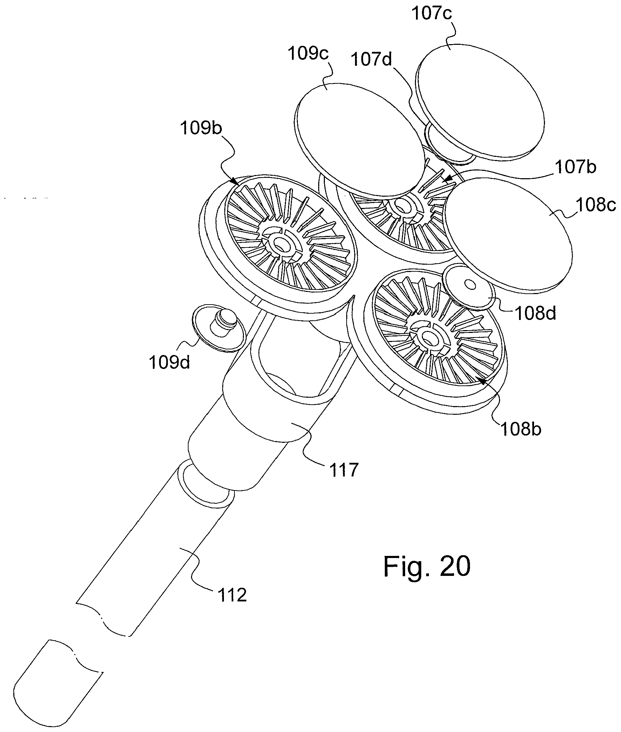

Enfin, la figure 20 illustre la présence de clapets anti-retour 107d, 108d, 109d. On constate que dans le mode de réalisation représenté ici, chacune des embouchures présente un clapet anti-retour; un clapet 109d est relié à la première embouchure 104, un clapet 107d est relié à la deuxième embouchure 105, et un clapet 108d est relié à la troisième embouchure 106. En outre, chacun des clapets 107d, 108d, 109d est ici positionné à l'opposé des embouchures par rapport aux filtres correspondant. Autrement dit, un moyen de filtration est ici positionné entre une embouchure et un clapet. Les clapets sont ainsi positionnés vers l'eau contenue dans le réservoir, ce qui est par exemple commode dans une configuration selon laquelle, lors de l'utilisation du réservoir, chacun des filtres 107, 108 et 109 se retrouve au moins en partie immergé dans l'eau contenue dans le réservoir. Les clapets permettent ainsi d'éviter que le moyen de filtration contenu dans chacun des filtres ne baigne dans l'eau, limitant un risque qu'ils n'absorbent le chlore contenu dans l'eau du réservoir par exemple, ou que les moyens de filtration ne s'usent inutilement.

On constate en outre que le clapet anti-retour 109d relié à la première embouchure 104 formant une entrée est positionné à l'envers par rapport aux clapets 107d et 108d reliés à la deuxième embouchure 105 et à la troisième embouchure 106 qui forment des sorties. En effet, dans le cas d'une entrée, il est préférable d'éviter que l'eau ne ressorte du réservoir, alors que dans le cas d'une sortie, il est préférable d'éviter que l'eau ne se réintroduise dans le réservoir.

Dans l'exemple de réalisation de la figure 20, chaque clapet est du type clapet guidé, de sorte qu'un passage pour l'eau est ouvert sous l'action de la pression de l'eau. Ils sont par exemple réalisés en une matière souple, par exemple en silicone ou en EPDM (éthylène-propylène-diène monomère).

Ainsi, en l'absence d'eau puisée par un utilisateur, les clapets restent fermés, permettant de limiter des risques de reflux et/ou de contact entre les moyens de filtration et l'eau contenue dans le réservoir.

Bien sûr, la présente invention ne se limite ni à la description précédente ni aux figures annexées, mais s'étend à toute variante à la portée de l'homme du métier.

Lorsqu'après une première occurrence de l'expression « au moins » est utilisé « le » ou « la », il doit être entendu que ces articles correspondent aux expressions « le ou la » ou « les », i.e. n'exclut pas le pluriel.

## Revendications

1. Réservoir (101) amovible pour un appareil de distribution de boisson (200), notamment apte à être raccordé à un réseau d'eau courante (300), le réservoir (101) comprenant au moins une chambre de stockage (102), une première embouchure (104) formant une entrée, et une deuxième embouchure (105) formant une sortie apte à être reliée à un robinet (208) de distribution d'eau, le réservoir (101) comprenant en outre au moins un moyen de filtration d'eau (107c) raccordé fluidiquement à la deuxième embouchure (105) du réservoir (101) en aval de la chambre de stockage (102), et le réservoir (101) étant **caractérisé en ce que** la première embouchure (104), la deuxième embouchure (105), et un contenant (107a) pour y loger le moyen de filtration (107c) communiquant avec la deuxième embouchure (105) forment un bloc (100) fixé à un goulot (115) du réservoir (101) de sorte à former un ensemble indémontable.

2. Réservoir (101) selon la revendication 1, **caractérisé en ce qu'**il comprend en outre une deuxième chambre de stockage (103), et au moins un moyen de filtration (108c) raccordé fluidiquement à une troisième embouchure (106) formant une deuxième sortie.

3. Réservoir (101) selon l'une quelconque des revendications 1 ou 2, **caractérisé en ce que** le moyen de filtration (107c) raccordé fluidiquement à la deuxième embouchure (105) est situé dans un corps du réservoir (101).

4. Réservoir (101) selon la revendication 2, ou la revendication 3 reliée à la revendication 2, **caractérisé en ce que** le moyen de filtration (108c) raccordé fluidiquement à la troisième embouchure (106) est situé dans un corps du réservoir (101).

5. Réservoir (101) selon l'une quelconque des revendications 1 à 4, **caractérisé en ce que** la première embouchure (104) est raccordée fluidiquement à au moins un moyen de filtration (109c).

6. Réservoir (101) selon la revendication 5, **caractérisé en ce que** le moyen de filtration (109c) raccordé fluidiquement à la première embouchure (104) est situé dans un corps du réservoir (101).

7. Réservoir (101) selon l'une quelconque des revendications 1 à 6, **caractérisé en ce que** le moyen de filtration (107c) raccordé fluidiquement à la deuxième embouchure (105) comprend du charbon actif, éventuellement associé à un filtre microbiologique.

8. Réservoir (101) selon l'une quelconque des revendications 2 à 7, **caractérisé en ce que** le moyen de filtration (108c) raccordé fluidiquement à la troisième embouchure (106) comprend du charbon actif, éventuellement associé à un filtre microbiologique.

9. Réservoir (101) selon l'une quelconque des revendications 5 à 8, **caractérisé en ce que** le moyen de filtration (109c) raccordé fluidiquement à la première embouchure (104) comprend un filtre mécanique pour retenir des sédiments et/ou particules, et/ou une résine filtrante et/ou des sels d'argent, ou une combinaison de ceux-ci.

10. Réservoir (101) selon l'une quelconque des revendications 1 à 9, , **caractérisé en ce que** le bloc (100) comprend une plateforme (120) présentant sur une face supérieure au moins la première embouchure (104) et la deuxième embouchure (105), et sur une face inférieure au moins le contenant (107a) du filtre (107) communiquant avec la deuxième embouchure (105).

11. Réservoir (101) selon l'une quelconque des revendications 1 à 10, **caractérisé en ce que** le bloc (100) est fixé sur un bord (115a) d'un goulot (115) du réservoir (101).

12. Réservoir (101) selon l'une quelconque des revendications 1 à 11, **caractérisé en ce qu'**un clapet anti-retour (107d, 108d, 109d) est relié à une embouchure (104, 105, 106).

13. Appareil de distribution de boisson (200), notamment apte à être raccordé sur un réseau d'eau courante (300), comprenant une enceinte (211), une arrivée d'eau (203) destinée à être reliée à un conduit d'arrivée d'eau du réseau d'eau courante (300), et au moins un robinet de distribution d'eau (208), **caractérisé en ce qu'**il comprend un réservoir amovible (101) selon l'une quelconque des revendications 1 à 12, dont la chambre de stockage (102) est située au moins en partie dans l'enceinte (211).

14. Appareil (200) selon la revendication 13, **caractérisé en ce qu'**il comprend une électrovanne de blocage de pression (205) située entre la première embouchure (104) du réservoir (101) et l'arrivée d'eau (203) de l'appareil (200).

## Patentansprüche

1. Abnehmbarer Behälter (101) für ein Getränkeausgabegerät (200), das insbesondere dazu geeignet ist, an ein Leitungswassernetz (300) angeschlossen zu werden, wobei der Behälter (101) zumindest eine Speicherkammer (102), eine einen Einlass bildende erste Mündung (104) und eine einen Auslass bildende zweite Mündung (105) enthält, die geeignet ist, mit einem Wasserauslaufventil (208) verbunden zu werden, wobei der Behälter (101) ferner zumindest eine Wasserfiltereinrichtung (107c) enthält, die fluidtechnisch an die zweite Mündung (105) des Behälters (102) stromabwärts der Speicherkammer (102) angeschlossen ist, wobei der Behälter (101) **dadurch gekennzeichnet ist, dass** die erste Mündung (104), die zweite Mündung (105) und ein Behältnis (107a), das die Filtereinrichtung (107c) aufnimmt und mit der zweiten Mündung (105) kommuniziert, einen Block (100) bilden, der an einen Hals (115) des Behälters (101) befestigt ist, so dass eine nicht zerlegbare Einheit gebildet wird.

2. Behälter (101) nach Anspruch 1, **dadurch gekennzeichnet, dass** er ferner eine zweite Speicherkammer (103) und zumindest eine Filtereinrichtung (108c) enthält, die fluidtechnisch an eine dritte Mündung (106) angeschlossen ist, die einen zweiten Auslass bildet.

3. Behälter (101) nach einem der Ansprüche 1 oder 2, **dadurch gekennzeichnet, dass** die Filtereinrichtung (107c), die fluidtechnisch an die zweite Mündung (105) angeschlossen ist, sich in einem Korpus des Behälters (101) befindet.

4. Behälter (101) nach Anspruch 2 oder Anspruch 3 in Kombination mit Anspruch 2, **dadurch gekennzeichnet, dass** die Filtereinrichtung (108c), die fluidtechnisch an die dritte Mündung (106) angeschlossen ist, sich in einem Korpus des Behälters (101) befindet.

5. Behälter (101) nach einem der Ansprüche 1 bis 4, **dadurch gekennzeichnet, dass** die erste Mündung (104) fluidtechnisch an zumindest eine Filtereinrichtung (109c) angeschlossen ist.

6. Behälter (101) nach Anspruch 5, **dadurch gekennzeichnet, dass** die fluidtechnisch an die erste Mündung (104) angeschlossene Filtereinrichtung (109c) sich in einem Korpus des Behälters (101) befindet.

7. Behälter (101) nach einem der Ansprüche 1 bis 6, **dadurch gekennzeichnet, dass** die fluidtechnisch an die zweite Mündung (105) angeschlossene Filtereinrichtung (107c) Aktivkohle enthält, die gegebenenfalls einem mikrobiologischen Filter zugeordnet ist.

8. Behälter (101) nach einem der Ansprüche 2 bis 7, **dadurch gekennzeichnet, dass** die fluidtechnisch an die dritte Mündung (106) angeschlossene Filtereinrichtung (108c) Aktivkohle enthält, die gegebenenfalls einem mikrobiologischen Filter zugeordnet ist.

9. Behälter (101) nach einem der Ansprüche 5 bis 8, **dadurch gekennzeichnet, dass** die fluidtechnisch an die erste Mündung (104) angeschlossene Filtereinrichtung (109c) ein mechanisches Filter zum Rückhalten von Sedimenten und/oder Partikeln, und/oder ein Filterharz und/oder Silbersalze oder eine Kombination derselben enthält.

10. Behälter (101) nach einem der Ansprüche 1 bis 9, **dadurch gekennzeichnet, dass** der Block (100) eine Plattform (120) enthält, die auf einer Oberseite zumindest die erste Mündung (104) und die zweite Mündung (105) und auf einer Unterseite zumindest das Behältnis (107a) des Filters (107) aufweist, das mit der zweiten Mündung (105) kommuniziert.

11. Behälter (101) nach einem der Ansprüche 1 bis 10, **dadurch gekennzeichnet, dass** der Block (100) an einen Rand (115a) eines Halses (115) des Behälters (101) befestigt ist.

12. Behälter (101) nach einem der Ansprüche 1 bis 11, **dadurch gekennzeichnet, dass** ein Rückschlagventil (107d, 108d, 109d) mit einer Mündung (104, 105, 106) verbunden ist.

13. Getränkeausgabegerät (200), das insbesondere dazu geeignet ist, an ein Leitungswassernetz (300) angeschlossen zu werden, enthaltend einen Aufnahmeraum (211), einen Wasserzulauf (203), der dazu bestimmt ist, mit einer Wasserzulaufleitung des Leitungswassernetzes (300) verbunden zu werden, und zumindest ein Wasserauslaufventil (208), **dadurch gekennzeichnet, dass** es einen abnehmbaren Behälter (101) nach einem der Ansprüche 1 bis 12 enthält, dessen Speicherkammer (102) sich zumindest teilweise in dem Aufnahmeraum (211) befindet.

14. Gerät (200) nach Anspruch 13, **dadurch gekennzeichnet, dass** es ein Magnetventil (205) zur Druckabsperrung enthält, das sich zwischen der ersten Mündung (104) des Behälters (101) und dem Wasserzulauf (203) des Geräts (200) befindet.

## Claims

1. Removable tank (101) for a beverage dispensing appliance (200), in particular suitable for connecting to a water supply system (300), the tank (101) comprising at least one storage chamber (102), a first opening (104) forming an inlet, and a second opening (105) forming an outlet suitable for connecting to a water dispensing tap (208), the tank (101) comprising moreover at least one water filtration means (107c) fluidically connected to the second opening (105) of the tank (101) downstream of the storage chamber (102), and the tank (101) being **characterized in that** the first opening (104), the second opening (105), and a container (107a) for housing the filtration means (107c) communicating with the second opening (105) form a unit (100) fixed on a neck (115) of the tank (101) in order to form a whole that cannot be disassembled.

2. Tank (101) according to claim 1, **characterized in that** it comprises moreover a second storage chamber (103), and at least one filtration means (108c) fluidically connected to a third opening (106) forming a second outlet.

3. Tank (101) according to any one of claims 1 or 2, **characterized in that** the filtration means (107c) fluidically connected to the second opening (105) is situated within a body of the tank (101).

4. Tank (101) according to claim 2, or claim 3 linked with claim 2, **characterized in that** the filtration means (108c) fluidically connected to the third opening (106) is situated within a body of the tank (101).

5. Tank (101) according to any one of claims 1 to 4, **characterized in that** the first opening (104) is fluidically connected to at least one filtration means (109c).

6. Tank (101) according to claim 5, **characterized in that** the filtration means (109c) fluidically connected to the first opening (104) is situated within a body of the tank (101).

7. Tank (101) according to any one of claims 1 to 6, **characterized in that** the filtration means (107c) fluidically connected to the second opening (105) comprises activated carbon, optionally combined with a microbiological filter.

8. Tank (101) according to any one of claims 2 to 7, **characterized in that** the filtration means (108c) fluidically connected to the third opening (106) comprises activated carbon, optionally combined with a microbiological filter.

9. Tank (101) according to any one of claims 5 to 8, **characterized in that** the filtration means (109c) fluidically connected to the first opening (104) comprises a mechanical filter to retain sediments and/or particles, and/or a filtering resin and/or silver salts, or a combination thereof.

10. Tank (101) according to any one of claims 1 to 9, **characterized in that** the unit (100) comprises a platform (120) having on an upper face at least the first opening (104) and the second opening (105), and on a lower face at least the container (107a) of the filter (107) communicating with the second opening (105).

11. Tank (101) according to any one of claims 1 to 10, **characterized in that** the unit (100) is fixed on a rim (115a) of a neck (115) of the tank (101).

12. Tank (101) according to any one of claims 1 to 11, **characterized in that** a non-return valve (107d, 108d, 109d) is attached to an opening (104, 105, 106).

13. Beverage dispensing appliance (200), in particular suitable for connecting to a water supply system (300), comprising an enclosure (211), a water intake (203) intended to be attached to a water intake pipe from the water supply system (300), and at least one tap for dispensing water (208), **characterized in that** it comprises a removable tank (101) according to any one of claims 1 to 12, the storage chamber (102) of which is situated at least partially within the enclosure (211).

14. Appliance (200) according to claim 13, **characterized in that** it comprises a pressure shut-off solenoid valve (205) situated between the first opening (104) of the tank (101) and the water intake (203) of the appliance (200).
